# EUROPÄISCHE PATENTSCHRIFT

(11) **EP 1 337 393 B1**
(45) Veröffentlichungstag und Bekanntmachung des Hinweises auf die Patenterteilung: **20.10.2004**
(21) Anmeldenummer: 01996454.3
(22) Anmeldetag: 16.11.2001
(51) Int. Cl.: B29C 73/02, B29C 73/04, B32B 35/00

(54) **VERFAHREN ZUR REPARATUR VON VERBUNDELEMENTEN**
METHOD FOR REPAIRING COMPOSITE ELEMENTS
PROCEDE POUR REPARER DES ELEMENTS MULTICOUCHES

(30) Priorität: 20.11.2000 DE 10057538
(43) Veröffentlichungstag der Anmeldung: 27.08.2003
(73) Patentinhaber: BASF AKTIENGESELLSCHAFT, 67056 Ludwigshafen (DE)
(72) Erfinder: FORSTER, Heinz, D-82515 Wolfratshausen (DE); HEFNER, Matthias, D-85253 Erdweg (DE); REINERTH, Peter, D-82275 Emmering (DE); SANDBANK, Thomas, D-80798 München (DE); BERNARD, Gerhard, D-82140 Olching (DE); DIERSSEN, Jens, D-85235 Odelzhausen (DE); STADLER, Edmund, D-96142 Hollfeld (DE); SCHWEERS, Olaf, D-67316 Carlsberg (DE); MERTES, Jürgen, D-67122 Altrip (DE); KNOBLAUCH, Georg, D-81247 München (DE)
(86) Internationale Anmeldenummer: PCT/EP2001/013270
(87) Internationale Veröffentlichungsnummer: WO 2002/040257

(56) Entgegenhaltungen:
- DE-A- 2 500 036
- US-A- 5 030 488
- US-A- 5 654 014
- US-A- 6 050 208

## Beschreibung

Die Erfindung betrifft Verfahren zur Reparatur von Verbundelementen, die folgende Schichtstruktur aufweisen:
- (i): 1 mm bis 20 mm, bevorzugt 2 mm bis 10 mm, besonders bevorzugt 5 mm bis 10 mm Metall,
- (ii): 10 mm bis 300 mm, bevorzugt 10 mm bis 100 mm Kunststoffe, bevorzugt Polyisocyanat-Polyadditionsprodukte erhältlich durch Umsetzung von (a) Isocyanaten mit (b) gegenüber Isocyanaten reaktiven Verbindungen,
- (iii): 1 mm bis 20 mm, bevorzugt 2 mm bis 10 mm, besonders bevorzugt 5 mm bis 10 mm Metall.

Die eingangs dargestellten Längen der Schichten (i), (ii) und (iii) beziehen sich auf die Dicke der jeweiligen Schicht.

Für Konstruktion von Schiffen, beispielsweise Schiffsrümpfen und Laderaumabdeckungen, Brücken, Dächern oder Hochhäusern müssen Konstruktionsteile verwendet werden, die erheblichen Belastungen durch äußere Kräfte standhalten können. Derartige Konstruktionsteile bestehen aufgrund dieser Anforderungen üblicherweise aus Metallplatten oder Metallträgern, die durch eine entsprechende Geometrie oder geeignete Verstrebungen verstärkt sind. So bestehen Schiffsrümpfe von Tankschiffen aufgrund von erhöhten Sicherheitsnormen üblicherweise aus einem inneren und einem äußeren Rumpf, wobei jeder Rumpf aus 15 mm dicken Stahlplatten, die durch ca. 2 m lange Stahlverstrebungen miteinander verbunden sind, aufgebaut ist. Da diese Stahlplatten erheblichen Kräften ausgesetzt sind, werden sowohl die äußere, als auch die innere Stahlhülle durch aufgeschweißte Verstärkungselemente versteift. Nachteilig an diesen klassischen Konstruktionsteilen wirken sich sowoh1 die erheblichen Mengen an Stahl aus, die benötigt werden, als auch die zeit- und arbeitsintensive Herstellung. Zudem weisen derartige Konstruktionsteile ein erhebliches Gewicht auf, wodurch sich eine geringere Tonnage der Schiffe und ein erhöhter Treibstoffbedarf ergibt. Zusätzlich sind solche klassischen Konstruktionselemente auf der Basis von Stahl sehr pflegeintensiv, da sowohl die äußeren Oberfläche, als auch die Oberflächen der Stahlteile zwischen der äußeren und inneren Hülle regelmäßig gegen Korrosion geschützt werden müssen.

Als Ersatz für die Stahlkonstruktionen sind SPS-Elemente (Sandwich-plate-system) bekannt, die einen Verbund aus Metall und Kunststoff beinhalten. Durch die Haftung des Kunststoffs an den zwei Metallschichten entstehen Verbundelemente mit außerordentlichen Vorteilen gegenüber bekannten Stahl Konstruktionen. Derartige SPS-Elemente sind bekannt aus den Schriften US-A- 6 050 208, US-A- 5 778 813, DE-A 198 25 083, DE-A 198 25 085, DE-A 198 25 084, DE-A 198 25 087 und DE-A 198 35 727. Im Vergleich zu Konstruktionen, die ausschließlich auf Stahl oder Eisen beruhen, weisen die SPS-Elemente bei einer Reparatur die Schwierigkeit auf, daß sie Kunststoffe enthalten. Verfahren zur Reparatur, die aus dem Stahlbau bekannt sind, können somit nicht automatisch auf SPS-Elemente angewendet werden. US-A- 6 050 208 offenbart Verfahren zur Reparatur von Verbundelementen mit einer zwischen zwei 2 bis 20 mm dicken Metallaussenschichten angeordneten, 10 bis 300mm dicken Kernschicht aus Polyisocyanat-Polyadditionsprodukte, wobei ein einer Metall-und Kernschicht enthalter Ausschitt aus dem Verbundelement heraus geschnitten wird, die an den Schrittflächen des verbleibenden Verbundelements Polyisocyanat-Polyadditionsprodukte entfernt werden, wobei die Schrittflächen der Metallschicht um eine Länge von mindestens 7cm über die Kernschicht hinausreichen.

Der vorliegenden Erfindung lag daher die Aufgabe zugrunde, ein Verfahren zur Reparatur von Verbundelementen zu entwickeln, die folgende Schichtstruktur aufweisen:
- (i): 1 bis 20 mm, bevorzugt 2 bis 10 mm, besonders bevorzugt 5 bis 10 mm Metall,
- (ii): 10 bis 300 mm, bevorzugt 10 bis 100 mm Kunststoffe, bevorzugt Polyisocyanat-Polyadditionsprodukte erhältlich durch Umsetzung von (a) Isocyanaten mit (b) gegenüber Isocyanaten reaktiven Verbindungen,
- (iii): 1 bis 20 mm, bevorzugt 2 bis 10 mm, besonders bevorzugt 5 bis 10 mm Metall. Das Reparaturverfahren sollte einfach durchführbar sein und zu Verbundelementen führen, die in ihrer statischen oder mechanischen Belastbarkeit keine wesentlichen Nachteile gegenüber vergleichbaren nicht-reparierten Verbundelementen aufweisen.

Diese Aufgabe wurde durch das Verfahren gemäß dem Anspruch 1 gelöst, wobei man aus dem Verbundelement einen Ausschnitt enthaltend (i), (ii) und gegebenenfalls (iii) herausschneidet, an den Schnittflächen des verbleibenden Verbundelements (ii) entfernt, so daß an den Schnittflächen (i) und gegebenenfalls (iii), wenn (iii) entfernt wird, um eine Länge (x) von mindestens 7 cm über (ii) hinausreichen, die ausgeschnittenen Schichten (i) und gegebenenfalls (iii) durch neue Schichten (ia) und gegebenenfalls (iiia) ersetzt und mit den verbliebenen Schichten (i) beziehungsweise gegebenenfalls (iii) des Verbundelementes verbindet, nach dem Verbinden der Schichten (i) mit (ia) und gegebenenfalls (iii) mit (iiia) in den sich zwischen den verbundenen Schichten (i)/(ia) und (iii) beziehungsweise gegebenenfalls (iii)/(iiia) befindenden freien Raum, der nicht von (ii) gefüllt ist, die Ausgangsstoffe zur Herstellung von (ii), insbesondere (a) und (b) füllt und anschließend in dem Raum zwischen den Schichten (i)/(ia) und (iii) beziehungsweise gegebenenfalls (iii)/(iiia) (a) Isocyanate mit (b) gegenüber Isocyanaten reaktiven Verbindungen umsetzt, wobei das Befüllen des Raumes zwischen (i)/(ia) und (iii) beziehungsweise gegebenenfalls (iii)/(iiia) mit (a) und (b) sowie gegebenenfalls den weiteren Ausgangsstoffen mit Hochdruckmaschinen mit Axialkolbendosierung durchgeführt wird, wobei der Vorratsbehälter mit Rührwerk und temperierbar ausgestaltet ist und die Austragsleistung 0,1 bis 3,0 kg/sec beträgt.

Verbundelemente, die nach dem erfindungsgemäßen Verfahren repariert werden können, sind allgemein bekannt und können beispielsweise über die Elastogran GmbH, Deutschland oder Intelligent Engineering Limited, England bezogen werden. Ihre Herstellung und ihre Eigenschaften sind in den eingangs zitierten Schriften beschrieben.

Das erfindungsgemäße Verfahren gliedert sich somit in die folgende Schritte:
(1) Ausschneiden des schadhaften Abschnitts des Verbundelementes
(2) Entfernen von (ii) zwischen (i) und (iii) an den Schnittkanten des verbleibenden Verbundelementes
(3) Einfügen von neuen Schichten (ia) und gegebenenfalls (iiia), die die ausgeschnittenen Schichten (i) und gegebenenfalls (iii) ersetzen
(4) Verbinden der neuen Schichten (ia) und gegebenenfalls (iiia) mit den Schichten (i) beziehungsweise (iii)
(5) Auffüllen des Raumes zwischen den Schichten (i)/(ia) und (iii) beziehungsweise gegebenenfalls (iiia)/(iii) mit (ii) indem man in dem Raum (a) und (b) füllt, die zu den Polyisocyanat-Polyadditionsprodukten reagieren.

Das Entfernen des schadhaften Abschnitts des Verbundelementes kann bevorzugt durch Verfahren erfolgen, die das Verbundelement nicht auf eine Temperatur erwärmen, die höher ist als die Entzündungs- oder Zersetzungstemperatur von (ii). Bevorzugt werden Verfahren angewendet, bei dem sich ein Volumen von (ii) von einem Kubikzentimeter innerhalb des durch den Schneidvorgang am stärksten erwärmten Bereiches des Verbundelementes über ein Zeitintervall von einer Minute durchschnittlich auf eine Temperatur von kleiner 180°C erwärmt. Eine zu hohe Temperatur bei dem Schneidvorgang kann dazu führen, daß (ii) in weiten Bereichen zerstört und damit die Stabilität des Verbundelementes nachhaltig beeinträchtigt wird. Auch ein unkontrolliertes Entzünden von (ii) während des Schneidvorgangs sollte vermieden werden. Bevorzugt wird man den Ausschnitt enthaltend (i), (ii) und gegebenenfalls (iii) durch Sägen oder mittels eines Lasers herausschneiden besonders bevorzugt durch Sägen, beispielsweise mittels Kreissäge, Trennscheibe bevorzugt bei gleichzeitiger Kühlung (z.B. mit Wasser, flüssigem Stickstoff und/oder Bohremulsion) oder mittels Hochdruckwasserstrahlschneiden. Derartige Trennverfahren sind dem einschlägigen Fachmann allgemein bekannt. Bevorzugt werden (i), (ii) und (iii) entfernt, besonders bevorzugt gleichzeitig in einem Schneidvorgang. Aus den zu reparierenden Verbundelementen können beispielsweise runde, ovale oder eckige Abschnitte entfernt werden, so daß beispielsweise das zu reparierende Verbundelement ein Loch aufweist.

In dem zweiten Schritt entfernt man (ii) an den Kanten, die durch das Herausschneiden des schadhaften Abschnitts entstanden sind. Dieses Entfernen von (ii) ist wesentlich, da in einem nachfolgenden Schritt die neuen Schichten (ia) und gegebenenfalls (iiia) mit (i) bzw. gegebenenfalls (iii) verbunden werden müssen und diese Verbindung üblicherweise durch Schweißen erfolgt. Die bei diesem Schweißvorgang entstehende Erwärmung würde, wenn sich (ii) in direkter Umgebung der Schweißnaht befände, zu einer unerwünschten Erwärmung oder gar Entzündung von (ii) führen. Die Entfernung von (ii) kann derart erfolgen, daß man den zwischen (i) und (iii) zu entfernenden Teil von (ii) durch Fräsen, oder Herausstemmen, beispielsweise mittels eines Stemmeisens, Meißels oder Spachtels, herauslöst, wobei (ii) vor und/oder bei dem Herauslösen erwärmt werden kann, um es zu erweichen. Bevorzugt erfolgt die Entfernung durch Fräsen. Bevorzugt wird soviel von (ii) entfernt, daß die Schichten (i) und gegebenenfalls (iii), soweit diese Schicht entfernt wird, jeweils um die Länge (x) von mindestens 7 cm über (ii) hinaus reichen.

In dem nächsten Schritt werden in dem Abschnitt des Verbundelementes, der repariert werden sollte und im ersten Schritt entfernt wurde, neue Schichten (ia) und gegebenenfalls (iiia) eingefügt. Diese neuen Schichten werden üblicherweise derart fixiert, daß die Stirnseite der Platte (i) des Verbundelementes auf die Stirnseite der Platte (ia) stößt und gegebenenfalls entsprechend die Stirnseite der Platte (iii) des Verbundelementes auf die Stirnseite der Platte (iiia). Bevorzugt sind die Platten (i) und gegebenenfalls (iii) derart ausgestaltet, daß bei der dargestellten Fixierung der Platten zueinander keine größeren Lücken zwischen den Platten (i) und (ia) beziehungsweise gegebenenfalls (iii) und (iiia) auftreten. Die entsprechenden Ersatzschichten (ia) und gegebenenfalls (iiia) weisen somit bevorzugt Abmessungen aus, die exakt in den entfernten Abschnitt des Verbundelementes passen. Eine Fixierung der Schichten (ia) und gegebenenfalls (iiia) an oder in dem Verbundelement ist mittels üblicher Einrichtungen möglich, beispielsweise können (ia) und gegebenenfalls (iiia) durch externe Halterungen, an denen (ia) und (iiia) beispielsweise magnetisch, über Klebstoff, Klemmen oder durch Verschweißung fixiert sind, im Verhältnis zum Verbundelement positioniert werden. Wie an späterer Stelle dargestellt, weisen (ia) und/oder gegebenenfalls (iiia) bevorzugt mindestens eine Öffnung (v) auf, durch die man in einem späteren Arbeitsschritt (a) und (b) sowie gegebenenfalls die weiteren Ausgangsstoffe füllt.

Die eingefügten neuen Schichten (ia) beziehungsweise gegebenenfalls (iiia) werden anschließend mit den Schichten (i) beziehungsweise gegebenenfalls (iii) verbunden. Dieses Verbinden kann mittels üblicher Verfahren erfolgen, beispielsweise durch Verschweißen. Als Verfahren zum Verschweißen der Metallplatten können alle bekannten Verfahren angewendet werden, beispielsweise mittels Laser oder mittels einer Acetylen/Sauerstoff gespeisten Flamme. Bevorzugt sind die Verbindungen von (i) mit (ia) und (iii) mit (iiia) derart vollständig, daß keine Lücken zwischen den Metallplatten vorliegen, die beim anschließenden Befüllen mit den Ausgangskomponenten als Leck zu einem Verlust an Ausgangsstoffen führen. Bevorzugt verbindet man somit (ia) mit (i) und gegebenenfalls (iiia) mit (iii) durch Schweißen.

Nach dem Verbinden der Schichten (i) mit (ia) und gegebenenfalls (iii) mit (iiia) befindet sich zwischen den verbundenen Schichten (i)/(ia) und(iii) beziehungsweise gegebenenfalls (iii)/(iiia) ein freier Raum, der nicht von (ii) gefüllt ist. Da (ii) zur Festigkeit der Verbundelemente und der Gesamtkonstruktion beiträgt, ist es wesentlich, daß dieser Raum mit (ii) gefüllt wird. Dazu werden, wie bei der Herstellung der einzelnen Verbundelemente, die Ausgangsstoffe zur Herstellung von (ii), insbesondere (a) und (b) in diesen Raum gefüllt und umgesetzt.

Bevorzugt weist (ia) und/oder gegebenenfalls (iiia) mindestens eine Öffnung (v) auf, durch die man (a) und (b) sowie gegebenenfalls die weiteren Ausgangsstoffe füllt. Bevorzugt weist (ia) und gegebenenfalls (iiia) mindestens zwei Öffnungen (v) auf, d.h. mindestens eine Öffnung (v) zur Befüllung und mindestens eine Öffnung (v), durch die die Luft aus dem zu befüllenden Raum entweichen kann und die als Überlauföffnung dienen können. Bevorzugt liegt oder liegen die Öffnung(en) in der Schicht (ia) vor. Bevorzugt dichtet man den mit (a) und (b) zu befüllenden Raum zwischen (i)/(ia) und (iii) beziehungsweise gegebenenfalls (iii)/(iiia) mit Ausnahme von der oder den Öffnung(en) (v) vor dem Befüllen mit (a) und (b) ab. Bevorzugt erfolgt das Befüllen derart, daß man die Ausgangsstoffe (a) und (b) zur Herstellung von (ii) kontinuierlich ohne Unterbrechung in einem einzigen Arbeitsschritt in den zu befüllenden Raum einträgt. Das Befüllen des Raumes zwischen (i)/(ia) und (iii) beziehungsweise gegebenenfalls (iii)/(iiia) mit (a) und (b) sowie gegebenenfalls den weiteren Ausgangsstoffen kann mit üblichen Fördereinrichtungen, bevorzugt kontinuierlich, durchgeführt werden, beispielsweise mit Hoch- und Niederdruckmaschinen, vorzugsweise Hochdruckmaschinen.

Bevorzugt erfolgt das Befüllen mit einer Hochdruckmaschine über einen Mischkopf, in dem die Ausgangskomponenten vermischt werden, in einem einzigen Arbeitsschritt, bevorzugt Injektionsvorgang. In einem einzigen Injektionsvorgang bedeutet, daß die Befüllung des Raumes zwischen (i)/(ia) und (iii) beziehungsweise gegebenenfalls (iii)/(iiia) mit den Ausgangsstoffen zur Herstellung von (ii) vor der vollständigen Befüllung nicht unterbrochen wird. Die Ausgangsstoffe werden somit bevorzugt in einem einzigen Schuß unter Druck in den Raum zwischen (i)/(ia) und (iii) beziehungsweise gegebenenfalls (iii)/(iiia) gegeben. Bevorzugt trägt man somit die Ausgangsstoffe mittels einer Hochdruckapparatur über einen Mischkopf ein.

Bevorzugt wird der Mischkopf an der Öffnung (v), durch die die Eintragung der Ausgangsstoffe erfolgt, fixiert, bevorzugt erfolgt die Verbindung zwischen dem Mischkopf und der Öffnung derart, daß ein Herauslaufen der Ausgangsstoffe zwischen dem Mischkopf und der Metallplatten verhindert wird und die Ausgangsstoffe vollständig in den Raum zwischen (i)/(ia) und (iii) beziehungsweise gegebenenfalls (iii)/(iiia) eingetragen werden können. Bevorzugt fixiert man den Mischkopf mechanisch. Dabei hat es sich als vorteilhaft herausgestellt, die Metallschicht nicht mit dem Gewicht des Mischkopfes zu belasten, da diese Belastung zu einer Verformung der Metallplatten führen kann. Besonders bevorzugt wird deshalb der Mischkopf an einer von (ia) unabhängigen Halterung befestigt, die den Mischkopf trägt. Besonders bevorzugt wird der Mischkopf somit nicht von (ia) getragen, aber mit (ia) mechanisch fixiert. Als Träger für den Mischkopf können übliche Vorrichtungen dienen, an denen der Mischkopf befestigt werden kann, beispielsweise neben oder über (i) oder (iii) positionierte Halterungen wie Gerüste, Kräne oder ähnliches.

Die Mengen an Ausgangsstoffen zur Herstellung von (ii) sind nur schwierig so zu bemessen, daß gerade der zu befüllende Raum gefüllt wird, aber ein Überlaufen verhindert wird. Deshalb wird bevorzugt eine größere Menge an Ausgangskomponenten zur Herstellung von (ii) in den Raum zwischen (i)/(ia) und (iii) beziehungsweise gegebenenfalls (iii)/(iiia) gegeben, als dieser Aufnehmen kann. Der resultierende Überlauf wird bevorzugt über mindestens eine der Öffnungen (v) abgeführt. Bevorzugt kann man an der oder den Öffnungen (v), die als Überlauf dienen, Überlaufgefäße anbringt. Diese Überlaufgefäße befinden sich bevorzugt in einer Position über dem zwischen (i) und (iii) mit den Ausgangsstoffen zur Herstellung von (ii) zu befüllenden Raum. Dies bietet den Vorteil, daß erst nach dem vollständigen Befüllen mit den Ausgangsstoffen ein Anstieg der noch flüssigen, d.h. noch nicht ausreagierten Ausgangsstoffe in den Überlaufgefäßen festgestellt werden kann. An dem Anstieg der Ausgangskomponenten in den Überlaufgefäßen kann man somit die vollständige Befüllung des Raumes zwischen (i) und (iii) ermitteln, anschließend die Überlaufgefäße verschließen, beispielsweise mit einem Kunststoff - oder Metallpfropfen bevorzugt mit einem Schraubverschluß, der sich entweder im Überlaufgefäß oder bevorzugt zwischen Überlaufgefäß und (ia) und/oder (iiia) befindet. Die Öffnung (v), durch die die Ausgangskomponenten (a) und (b) gefüllt werden, bleiben bevorzugt bis zum Ende des Aushärtevorgangs der Mischung (a) und (b) durch den fixierten Mischkopf verschlossen.

Finden sich (i)/(ia) und gegebenenfalls (iii)/(iiia) nicht in einer horizontalen Ausrichtung bei der Befüllung des Raumes mit den Ausgangskomponenten, so befindet sich bevorzugt mindestens eine Öffnung (v) in (ia) am oberen Ende von (ia), damit ein Überlauf von Ausgangskomponenten aus dieser Öffnung (v) erst dann stattfindet, wenn der zu befüllende Raum vollständig gefüllt ist.

Bevorzugt handelt es sich bei den Öffnungen (v) um Bohrungen mit einem Durchmesser von 0,1 cm bis 5,0 cm, bevorzugt 0,5 cm bis 4 cm bevorzugt in (ia).

Die Förderleistung kann in Abhängigkeit des zu befüllenden Volumens variiert werden. Um eine homogene Durchhärtung von (ii) zu gewährleisten, wird die Förderleistung und Fördereinrichtung derart gewählt, daß der zu befüllende Raum innerhalb von 0,5 bis 20 min mit den Komponenten zur Herstellung von (ii) gefüllt werden kann. Es handelt sich bei den Maschinen zur Befüllung mit den Ausgangskomponenten um Hochdruckmaschinen mit Axialkolbendosierung, wobei der Vorratsbehälter mit Rührwerk und temperierbar ausgestaltet ist und bevorzugt ein Kreislauf Vorratsbehälter-Mischkopf-Vorratsbehälter vorliegt, wobei die Austragsleistung 0,1 bis 3,0 kg/sec beträgt. Geeignete Fördereinrichtungen sind beispielsweise Hochdruckdosieranlagen der Firma Elastogran GmbH, z.B. Puromat®PU 30 für Austragsleistungen von 50 bis 600 g/sec oder Puromat®PU 150 für Austragsleistungen von 300 bis 2800 g/sec.

Die Ausgangskomponenten werden üblicherweise bei einer Temperatur von 0 bis 100°C, vorzugsweise von 20 bis 60°C, gemischt und wie bereits beschrieben in den Raum zwischen (i) und (iii) eingebracht. Die Vermischung kann mechanisch mittels eines Rührers oder einer Rührschnecke, bevorzugt aber durch das bei Hochdruckmaschinen übliche Gegenstromprinzip erfolgen, bei dem A- und B-Komponenten-Strahl sich im Mischkopf unter jeweils hohem Druck treffen und vermischen, wobei der Strahl einer jeden Komponente auch geteilt sein kann. Die Reaktionstemperatur, d.h. die Temperatur, bei die Umsetzung erfolgt, beträgt üblicherweise > 20°C, bevorzugt 50 bis 150°C.

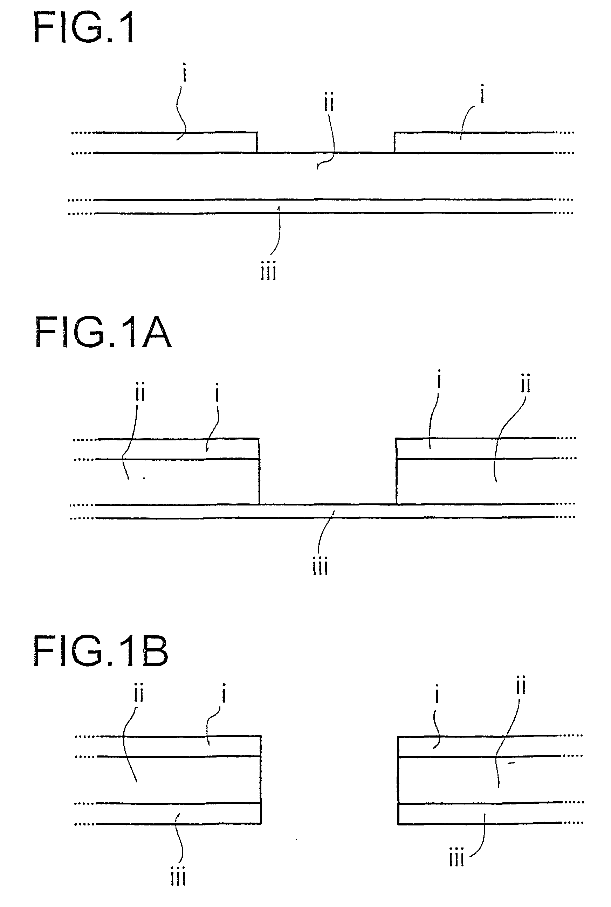

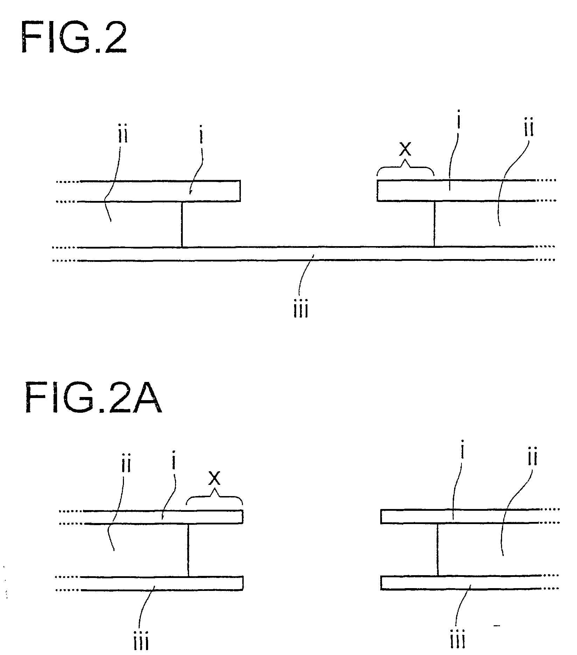

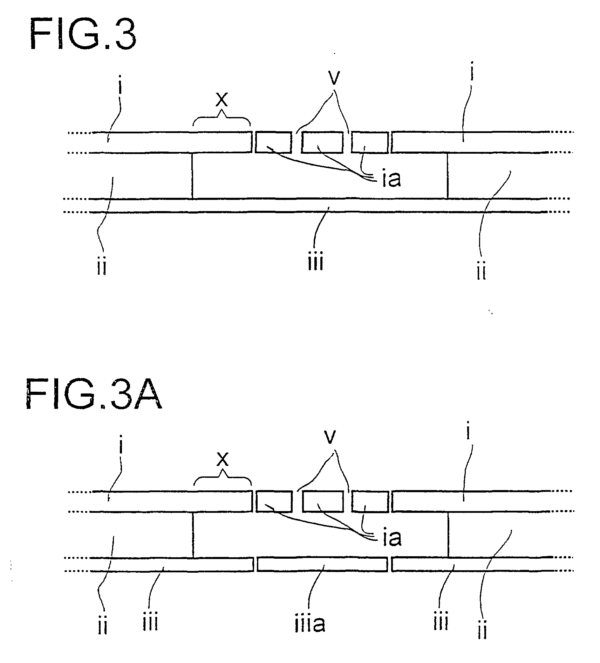

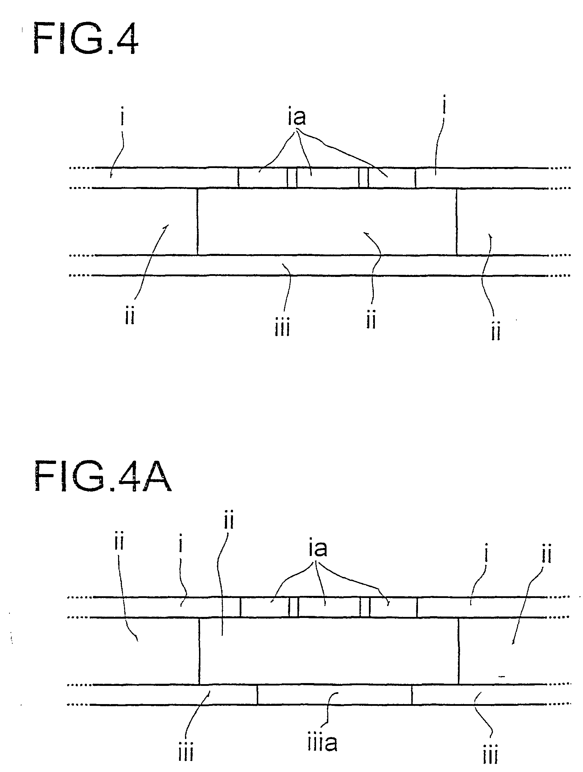

Einzelne Arbeitsschritte des erfindungsgemäßen Reparaturverfahrens sind schematisch in den Figuren 1 bis 3 dargestellt. Das Entfernen des schadhaften Abschnitts ist in Figur 1, 1a bzw 1b dargestellt, das Entfernen von (ii) in Figur 2 bzw 2a, das Einfügen von (ia) und gegebenenfalls (iiia) in Figur 3 bzw 3a. Die reparierten Verbundelemente mit dem neu hergestellten (ii) sind in den Figuren 4 und 4a skizziert.

Die Umsetzungsprodukte (ii) haften sowohl an (i) und (iii) als auch an (ia) und (iiia). Dadurch wird gewährleistet, daß das verbundene Gasamtelement eine Festigkeit aufweist, die nahezu identisch ist mit der Festigkeit einzelnen, vorgefertigten Verbunelemente.

In dieser Schrift sind unter den Ausdrücken "Ausgangsstoffe" oder "Ausgangskomponenten" insbesondere (a) Isocyanate und (b) gegenüber Isocyanaten reaktive Verbindungen zu verstehen, aber gegebenenfalls, soweit sie zum Einsatz kommen, auch (c) Gase, (d) Katalysatoren, (e) Hilfsmittel und/oder (f) Treibmittel.

Bevorzugt führt man die Umsetzung von (a) mit (b) in Gegenwart von 1 bis 50 Volumen-% Gase (c) durch. Bevorzugt setzt man als (b) Polymerpolyole ein. Bevorzugt führt man die Umsetzung von (a) mit (b) in Gegenwart von (f) Treibmitteln durch.

Bevorzugt weisen die Verbundelemente die folgende Schichtstruktur auf:
- (i): 2 mm bis 20 mm, bevorzugt 2 mm bis 10 mm, besonders bevorzugt 5 mm bis 10 mm Metall,
- (ii): 10 mm bis 300 mm, bevorzugt 10 mm bis 100 mm Kunststoffe, bevorzugt Polyisocyanat-Polyadditionsprodukte mit einer Dichte von 350 bis 1200 kg/m³ erhältlich durch Umsetzung von (a) Isocyanaten mit (b) gegenüber Isocyanaten reaktiven Verbindungen bevorzugt in Gegenwart von (f) Treibmitteln und/oder 1 bis 50 Volumen-%, bezogen auf das Volumen der Polyisocyanat-Polyadditionsprodukte, mindestens eines Gases (c) sowie gegebenenfalls (d) Katalysatoren und/oder (e) Hilfsmittel,
- (iii): 2 mm bis 20 mm, bevorzugt 2 mm bis 100 mm, besonders bevorzugt 5 mm bis 10 mm Metall.

Die Polyisocyanat-Polyadditionsprodukte (ii) der erfindungsgemäß hergestellten Verbundelemente weisen bevorzugt ein Elastizitätsmodul von >275 MPa im Temperaturbereich von -45 bis +50°C (nach DIN 53457), eine Adhäsion zu (i) und (iii) von >4 MPa (nach DIN 53530), eine Dehnung von >30% im Temperaturbereich von -45 bis +50°C (nach DIN 53504), eine Zugfestigkeit von >20 MPa (nach DIN 53504) und eine Druckfestigkeit von > 20 MPa (nach DIN 53421) auf.

Die Herstellung der erfindungsgemäßen Verbundelemente kann man derart durchführen, daß man zwischen (i) und (iii) Polyisocyanat-Polyadditionsprodukte (ii), üblicherweise Polyurethane, die gegebenenfalls Harnstoff- und/oder Isocyanuratstrukturen aufweisen können, durch Umsetzung von (a) Isocyanaten mit (b) gegenüber Isocyanaten reaktiven Verbindungen gegebenenfalls in Gegenwart von Treibmitteln (f), 1 bis 50 Volumen-%, bezogen auf das Volumen der Polyisocyanat-Polyadditionsprodukte, mindestens eines Gases (c), (d) Katalysatoren und/oder (e) Hilfsmittel herstellt, wobei bevorzugt (ii) an (i) und (iii) haftet.

Bevorzugt wird die Umsetzung in einer geschlossenen Form durchgeführt, d.h. (i) und (iii) befinden sich bei der Befüllung mit den Ausgangskomponenten zur Herstellung von (ii) in einer Form, die nach der vollständigen Eintragung der Ausgangskomponenten verschlossen wird. Nach der Umsetzung der Ausgangskomponenten zur Herstellung von (ii) kann das Verbundelement entformt werden.

Die Oberflächen von (i),(ia), (iii) und (iiia) werden vor der Herstellung der Verbundelemente zur Reinigung und Erhöhung der Oberflächenrauhigkeit mit Sand oder Stahlkugeln bevorzugt mit Korund oder Eisenkies gestrahlt.

Dieses Strahlen kann nach den üblichen Verfahren erfolgen, bei denen das Strahlgut beispielsweise unter hohem Druck auf die Oberflächen auftrifft.

Geeignete Apparaturen für eine solche Behandlung sind kommerziell erhältlich.

Durch diese Behandlung der Oberflächen, die nach der Umsetzung von (a) mit (b) in Kontakt mit (ii) stehen, führt zu einer deutlich verbesserten Haftung von (ii) an (i)/(ia) und (iii) beziehungsweise gegebenenfalls (iii)/(iiia). Die Oberflächen von (i)/(ia) und (iii) beziehungsweise gegebenenfalls, an die (ii) haften soll, sind bevorzugt frei von anorganischen und/oder organischen Stoffen, die eine Haftung vermindern, beispielsweise Staub, Schmutz, Ölen und Fetten oder allgemein als Formtrennmitteln bekannten Stoffen.

Die Schichten (i), (ia), (iii) und gegebenenfalls (iiia) können bevorzugt als übliche Metallplatten, beispielsweise Eisen-, Stahl-, Kupfer- und/oder Aluminium-platten, mit den erfindungsgemäßen Dicken eingesetzt werden. Bevorzugt basieren (i) und (ia) auf dem gleichen Metall, damit das Verbinden der Schichten beispielsweise durch Verschweißen vereinfacht wird. Soweit auch (iii) entfernt wird, gilt das gleiche für die Schichten (iii) und (iiia).

Die Befüllung des Raumes zwischen (i)/(ia) und (iii) beziehungsweise gegebenenfalls (iii)/(iiia) kann sowohl in vertikaler als auch horizontaler Ausrichtung von (i)/(ia) und (iii) beziehungsweise gegebenenfalls (iii)/(iiia) erfolgen.

Sowohl (i)/(ia) als auch (iii)/(iiia) können beschichtet, beispielsweise grundiert, lackiert und/oder mit üblichen Kunststoffen beschichtet bei der Herstellung der erfindungsgemäßen Verbundelemente eingesetzt werden. Bevorzugt werden (i)/(ia) und (iii)/(iiia) unbeschichtet und besonders bevorzugt beispielsweise durch übliches Sandstrahlen gereinigt eingesetzt.

Die Herstellung der Polyisocyanat-Polyadditionsprodukten (ii), üblicherweise Polyurethan- und gegebenenfalls Polyisocyanuratprodukten, insbesondere Polyurethanelastomeren, durch Umsetzung von (a) Isocyanaten mit (b) gegenüber Isocyanaten reaktiven Verbindungen gegebenenfalls in Gegenwart von (f) Treibmitteln, (d) Katalysatoren (e) Hilfsmitteln und/oder (c) Gasen ist vielfach beschrieben worden.

Die Ausgangsstoffe (a), (b), (c), (d), (e) und (f) in dem erfindungsgemäßen Verfahren werden im Folgenden beispielhaft beschrieben:

Als Isocyanate (a) kommen die an sich bekannten aliphatischen, cycloaliphatischen, araliphatischen und/oder aromatischen Isocyanate, bevorzugt Diisocyanate in Frage, die gegebenenfalls nach allgemein bekannten Verfahren biuretisiert und/oder isocyanuratisiert worden sein können. Im einzelnen seien beispielhaft genannt: Alkylendiisocyanate mit 4 bis 12 Kohlenstoffatomen im Alkylenrest, wie 1,12-Dodecandiisocyanat, 2-Ethyl-tetramethylendiisocyanat-1,4, 2-Methylpentamethylendiisocyanat-1,5, Tetramethylendiisocyanat-1,4, Lysinesterdiisocyanate (LDI), Hexamethylendiisocyanat-1,6 (HDI), Cyclohexan-1,3- und/oder 1,4-diisocyanat, 2,4- und 2,6-Hexahydrotoluylendiisocyanat sowie die entsprechenden Isomerengemische, 4,4'-, 2,2'- und 2,4'-Dicyclohexylmethandiisocyanat sowie die entsprechenden Isomerengemische, 1-Isocyanato-3,3,5-trimethyl-5-isocyanatomethylcyclohexan (IPDI), 2,4- und/oder 2,6-Toluylendiisocyanat (TDI), 4,4'-, 2,4'- und/oder 2,2'-Diphenylmethandiisocyanat (MDI), Polyphenylpolymethylen-polyisocyanate und/oder Mischungen enthaltend mindestens zwei der genannten Isocyanate. Außerdem können Ester-, Harnstoff-, Allophanat-, Carbodiimid-, Uretdion- und/oder Urethangruppen enthaltende Di- und/oder Polyisocyanate in dem erfindungsgemäßen Verfahren eingesetzt werden. Bevorzugt werden 2,4'-, 2,2'- und/oder 4,4'-MDI und/oder Polyphenylpolymethylen-polyisocyanate eingesetzt, besonders bevorzugt Mischungen enthaltend Polyphenylpolymethylen-polyisocyanate und mindestens eines der MDI-Isomere.

Als (b) gegenüber Isocyanaten reaktive Verbindungen können beispielsweise Verbindungen eingesetzt werden, die als gegenüber Isocyanaten reaktive Gruppen Hydroxyl-, Thiol- und/oder primäre und/oder sekundäre Aminogruppen aufweisen und üblicherweise ein Molekulargewicht von 60 bis 10000 g/mol aufweisen, z.B. Polyole ausgewählt aus der Gruppe der Polymerpolyole, Polyetherpolyalkohole, Polyesterpolyalkohole, Polythioetherpolyole, hydroxylgruppenhaltigen Polyacetale und hydroxylgruppenhaltigen aliphatischen Polycarbonate oder Mischungen aus mindestens zwei der genannten Polyole. Diese Verbindungen weisen üblicherweise eine Funktionalität gegenüber Isocyanaten von 2 bis 6 und ein Molekulargewicht von 400 bis 8000 auf und sind dem Fachmann allgemein bekannt.

Beispielsweise kommen als Polyetherpolyalkohole, die nach bekannter Technologie durch Anlagerung von Alkylenoxiden, beispielsweise Tetrahydrofuran, 1,3-Propylenoxid, 1,2- bzw. 2,3-Butylenoxid, Styroloxid und vorzugsweise Ethylenoxid und/oder 1,2-Propylenoxid an übliche Startersubstanzen erhältlich sind. Als Startersubstanzen können beispielsweise bekannte aliphatische, araliphatische, cycloaliphatische und/oder aromatische Verbindungen eingesetzt werden, die mindestens eine, bevorzugt 2 bis 4 Hydroxylgruppen und/oder mindestens eine, bevorzugt 2 bis 4 Aminogruppen enthalten. Beispielsweise können als Startersubstanzen Ethandiol, Diethylenglykol, 1,2- bzw. 1,3-Propandiol, 1,4-Butandiol, 1,5-Pentandiol, 1,6-Hexandiol, 1,7-Heptandiol, Glycerin, Trimethylolpropan, Neopentylglykol, Zucker, beispielsweise Saccharose, Pentaerythrit, Sorbitol, Ethylendiamin, Propandiamin, Neopentandiamin, Hexamethylendiamin, Isophorondiamin, 4,4'-Diaminodicyclohexylmethan, 2-(Ethylamino)ethylamin, 3-(Methylamino)propylamin, Diethylentriamin, Dipropylentriamin und/oder N,N'-Bis(3-aminopropyl)-ethylendiamin eingesetzt werden.

Die Alkylenoxide können einzeln, alternierend nacheinander oder als Mischungen verwendet werden. Bevorzugt werden Alkylenoxide verwendet, die zu primären Hydroxylgruppen in dem Polyol führen. Besonders bevorzugt werden als Polyole solche eingesetzt, die zum Abschluß der Alkoxylierung mit Ethylenoxid alkoxyliert wurden und damit primäre Hydroxylgruppen aufweisen.

Als Polymerpolyole, einer speziellen Klasse der Polyetherpolyole, können allgemein aus der Polyurethanchemie bekannte Verbindungen eingesetzt werden, bevorzugt Styrol-Acrylnitril-Pfropfpolyole.

Gerade der Einsatz von Polymerpolyolen kann den Schrumpf des Polyisocyanat-Polyadditionsproduktes, beispielsweise des Polyurethans deutlich vermindern und somit zu einer verbesserten Haftung von (ii) an (i) und (iii) führen. Gegebenenfalls können als weiteren Maßnahmen, den Schrumpf zu verringern, bevorzugt Treibmittel (f) und/oder Gase (c) eingesetzt werden.

Geeignete Polyesterpolyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen, und mehrwertigen Alkoholen, vorzugsweise Diolen, mit 2 bis 12 Kohlenstoffatomen, vorzugsweise 2 bis 6 Kohlenstoffatomen hergestellt werden. Die Polyesterpolyole besitzen vorzugsweise eine Funktionalität von 2 bis 4, insbesondere 2 bis 3, und ein Molekulargewicht von 480 bis 3000, vorzugsweise 600 bis 2000 und insbesondere 600 bis 1500.

Die erfindungsgemäßen Verbundelemente werden bevorzugt unter Verwendung von Polyetherpolyalkoholen als Komponente (b) zur Umsetzung mit den Isocyanaten hergestellt, zweckmäßigerweise solche mit einer mittleren Funktionalität gegenüber Isocyanaten von 1,5 bis 8, bevorzugt 2 bis 6, und einem Molekulargewicht von 400 bis 8000.

Die Verwendung von Polyetherpolyalkoholen bietet erhebliche Vorteile durch eine verbesserte Stabilität der Polyisocyanat-Polyadditionsprodukte gegen eine hydrolytische Spaltung und aufgrund der geringeren Viskosität, jeweils im Vergleich mit Polyesterpolyalkoholen. Die verbesserte Stabilität gegen Hydrolyse ist insbesondere bei einem Einsatz im Schiffbau vorteilhaft. Die geringere Viskosität der Polyetherpolyalkohole und der Reaktionsmischung zur Herstellung von (ii) enthaltend die Polyetherpolyalkohole ermöglicht eine schnellere und einfachere Befüllung des Raumes zwischen (i) und (iii) mit der Reaktionsmischung zur Herstellung der Verbundelemente. Aufgrund der erheblichen Abmessungen insbesondere von Konstruktionsteilen im Schiffbau sind niedrigviskose Flüssigkeiten von erheblichem Vorteil.

Als gegenüber Isocyanaten reaktive Verbindungen sind des weiteren Substanzen geeignet, die ein Kohlenwasserstoffgerüst mit 10 bis 40 Kohlenstoffatomen und 2 bis 4 gegenüber Isocyanaten reaktive Gruppen aufweisen. Unter dem Ausdruck Kohlenwasserstoffgerüst.ist eine ununterbrochene Abfolge von Kohlenstoffatomen zu verstehen, die nicht wie beispielsweise im Falle von Ethern mit Sauerstoffatomen unterbrochen ist. Als solche Substanzen, im Folgenden auch als (b3) bezeichnet, können beispielsweise Rizinusöl und deren Derivate eingesetzt werden.

Als gegenüber Isocyanaten reaktive Verbindungen können des weiteren zusätzlich zu den genannten Verbindungen mit einem üblichen Molekulargewicht von 400 bis 8000 gegebenenfalls Diole und/oder Triole mit Molekulargewichten von 60 bis <400 als Kettenverlängerungs- und/oder Vernetzungsmittel bei dem erfindungsgemäßen Verfahren eingesetzt werden. Zur Modifizierung der mechanischen Eigenschaften, z.B. der Härte, kann sich jedoch der Zusatz von Kettenverlängerungsmitteln, Vernetzungsmitteln oder gegebenenfalls auch Gemischen davon als vorteilhaft erweisen. Die Kettenverlängerungs- und/oder Vernetzungsmittel weisen vorzugsweise ein Molekulargewicht von 60 bis 300 auf. In Betracht kommen beispielsweise aliphatische, cycloaliphatische und/oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxyethyl)-hydrochinon, Triole, wie 1,2,4-, 1,3,5-Trihydroxy-cyclohexan, Glycerin und Trimethylolpropan, niedermolekulare hydroxylgruppenhaltige Polyalkylenoxide auf Basis Ethylen- und/oder 1,2-Propylenoxid und den vorgenannten Diolen und/oder Triolen als Startermoleküle und/oder Diamine wie z.B. Diethyltoluendiamin und/oder 3,5-Dimethylthio-2,4-toluenediamin.

Sofern zur Herstellung der Polyisocyanat-Polyadditionsprodukten Kettenverlängerungsmittel, Vernetzungsmittel oder Mischungen davon Anwendung finden, kommen diese zweckmäßigerweise in einer Menge von 0 bis 30 Gew.-%, vorzugsweise von 1 bis 30 Gew.-%, bezogen auf das Gewicht der insgesamt eingesetzten gegenüber Isocyanaten reaktiven Verbindungen (b), zum Einsatz.

Außerdem können als (b) aliphatische, araliphatische, cycloaliphatische und/oder aromatische Carbonsäuren zur Optimierung des Härtungsverlaufes bei der Herstellung von (ii) eingesetzt werden. Beispiele für solche Carbonsäuren sind Ameisensäure, Essigsäure, Bernsteinsäure, Oxalsäure, Malonsäure, Glutarsäure, Adipinsäure, Zitronensäure, Benzoesäure, Salicylsäure, Phenylessigsäure, Phthalsäure, Toluolsulfonsäure, Derivate der genannten Säuren, Isomere der genannten Säuren und beliebigen Mischungen der genannten Säuren. Der Gewichtsanteil dieser Säuren kann 0 bis 5 Gew.-%, bevorzugt 0,2 bis 2 Gew.-%, bezogen auf das Gesamtgewicht von (b), betragen.

Mit dem Einsatz von Amin-gestarteten Polyetherpolyalkoholen kann zudem das Durchhärteverhalten von der Reaktionsmischung zur Herstellung von (ii) verbessert werden. Bevorzugt werden die Verbindungen (b), wie auch die anderen Komponenten zur Herstellung von (ii), mit einem möglichst geringen Gehalt an Wasser eingesetzt, um die Bildung von Kohlendioxid durch Reaktion des Wassers mit Isocyanatgruppen zu vermeiden.

Der bevorzugte Einsatz von Polymerpolyolen, insbesondere Styrol-Acrylnitril-Pfropfpolyolen, kann den Schrumpf des Polyisocyanat-Polyadditionsproduktes, beispielsweise des Polyurethans deutlich vermindern und somit zu einer verbesserten Haftung von (ii) an (i) und (iii) führen. Gegebenenfalls können als weiteren Maßnahmen, den Schrumpf zu verringern, bevorzugt Treibmittel (f) und/oder Gase (c) eingesetzt werden.

Als Komponente (c) zur Herstellung von (ii) können allgemein bekannte Verbindungen eingesetzt werden, die einen Siedepunkt bei einem Druck von 1 bar von kleiner (d.h. bei niedrigeren Temperaturen als) -50°C aufweisen, beispielsweise Luft, Kohlendioxid, Stickstoff, Helium und/oder Neon. Bevorzugt wird Luft eingesetzt. Die Komponente (c) ist bevorzugt gegenüber der Komponente (a), besonders bevorzugt gegenüber den Komponenten (a) und (b) inert, d.h. eine Reaktivität des Gases gegenüber (a) und (b) ist kaum, bevorzugt nicht nachzuweisen. Der Einsatz des Gases (c) unterscheidet sich grundlegend von dem Einsatz üblicher Treibmittel zur Herstellung von geschäumten Polyurethanen. Während übliche Treibmittel (f) flüssig eingesetzt werden oder im Falle der gasförmigen physikalischen Treibmittel in der Polyol-Komponente bis zu einem geringen Prozentsatz löslich sind) und während der Umsetzung entweder aufgrund der Wärmeentwicklung verdampfen oder aber im Falle des Wassers aufgrund der Reaktion mit den Isocyanatgruppen gasförmiges Kohlendioxid entwickeln, wird in der vorliegenden Erfindung die Komponente (c) bevorzugt bereits gasförmig als Aerosol beispielsweise in der Polyolkomponente eingesetzt.

Als Katalysatoren (d) können allgemein bekannte Verbindungen eingesetzt werden, die die Reaktion von Isocyanaten mit den gegenüber Isocyanaten reaktiven Verbindungen stark beschleunigen, wobei vorzugsweise ein Gesamtkatalysatorgehalt von 0,001 bis 15 Gew.-%, insbesondere 0,05 bis 6 Gew.-%, bezogen auf das Gewicht der insgesamt eingesetzten gegenüber Isocyanaten reaktiven Verbindungen, verwendet wird. Beispielsweise können folgende Verbindungen verwendet werden: Triethylamin, Tributylamin, Dimethylbenzylamin, Dicyclohexylmethylamin, Dimethylcyclohexylamin, N,N,N',N'-Tetramethyl-diamino-diethylether, Bis-(dimethylaminopropyl)-harnstoff, N-Methyl- bzw. N-Ethylmorpholin, N-Cyclohexylmorpholin, N,N,N',N'-Tetramethylethylendiamin, N,N,N',N'-Tetramethylbutandiamin, N,N,N',N'-Tetramethylhexandiamin-1,6, Pentamethyldiethylentriamin, Dimethylpiperazin, N-Dimethylaminoethylpiperidin, 1,2-Dimethylimidazol, 1-Azabicyclo-(2,2,0)-octan, 1,4-Diazabicyclo-(2,2,2)-octan (Dabco) und Alkanolaminverbindungen, wie Triethanolamin, Triisopropanolamin, N-Methyl- und N-Ethyl-diethanolamin, Dimethylaminoethanol, 2-(N,N-Dimethylaminoethoxy)ethanol, N,N',N''-Tris-(dialkylaminoalkyl)hexahydrotriazine, z.B. N,N',N''-Tris-(dimethylaminopropyl)-s-hexahydrotriazin, Eisen(II)-chlorid, Zinkchlorid, Bleioctoat und vorzugsweise Zinnsalze, wie Zinndioctoat, Zinndiethylhexoat, Dibutylzinndilaurat und/oder Dibutyldilaurylzinnmercaptid, 2,3-Dimethyl-3,4,5,6-tetrahydropyrimidin, Tetraalkylammoniumhydroxide, wie Tetramethylammoniumhydroxid, Alkalihydroxide, wie Natriumhydroxid, Alkalialkoholate, wie Natriummethylat und Kaliumisopropylat, und/oder Alkalisalze von langkettigen Fettsäuren mit 10 bis 20 C-Atomen und gegebenenfalls seitenständigen OH-Gruppen.

Es hat sich als sehr vorteilhaft erwiesen, die Herstellung von (ii) in Gegenwart von (d) durchzuführen, um die Reaktion zu beschleunigen.

Der Reaktionsmischung zur Herstellung der Polyisocyanat-Polyadditionsprodukte (ii) können gegebenenfalls (e) Hilfsmittel einverleibt werden. Genannt seien beispielsweise Füllstoffe, oberflächenaktive Substanzen, Farbstoffe, Pigmente, Flammschutzmittel, Hydrolyseschutzmittel, fungistatische, bakteriostatisch wirkende Substanzen und Schaumstabilisatoren.

Als oberflächenaktive Substanzen kommen z.B. Verbindungen in Betracht, welche zur Unterstützung der Homogenisierung der Ausgangsstoffe dienen und gegebenenfalls auch geeignet sind, die Struktur der Kunststoffe zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure. Die oberflächenaktiven Substanzen werden üblicherweise in Mengen von 0,01 bis 5 Gew.-%, bezogen auf 100 Gew.-% der insgesamt eingesetzten gegenüber Isocyanaten reaktiven Verbindungen (b), angewandt.

Geeignete Flammschutzmittel sind beispielsweise Trikresylphosphat, Tris-(2-chlorethyl)phosphat, Tris-(2-chlorpropyl)phosphat, Tris(1,3-dichlorpropyl)phosphat, Tris-(2,3-dibrompropyl)phosphat, Tetrakis-(2-chlorethyl)-ethylendiphosphat, Dimethylmethanphosphonat, Diethanolaminomethylphosphonsäurediethylester sowie handelsübliche halogenhaltige Flammschutzpolyole. Außer den bereits genannten halogensubstituierten Phosphaten können auch anorganische oder organische Flammschutzmittel, wie roter Phosphor, Aluminiumoxidhydrat, Antimontrioxid, Arsenoxid, Ammoniumpolyphosphat und Calciumsulfat, Blähgraphit oder Cyanursäurederivate, wie z.B. Melamin, oder Mischungen aus mindestens zwei Flammschutzmitteln, wie z.B. Ammoniumpolyphosphaten und Melamin sowie gegebenenfalls Maisstärke oder Ammoniumpolyphosphat, Melamin und Blähgraphit und/oder gegebenenfalls aromatische Polyester zum Flammfestmachen der Polyisocyanat-polyadditionsprodukte verwendet werden. Im allgemeinen hat es sich als zweckmäßig erwiesen, 5 bis 50 Gew.-%, vorzugsweise 5 bis 25 Gew.-%, der genannten Flammschutzmittel, bezogen auf das Gewicht der insgesamt eingesetzten gegenüber Isocyanaten reaktiven Verbindungen, zu verwenden.

Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im einzelnen seien beispielhaft genannt: anorganische Füllstoffe wie silikatische Mineralien, beispielsweise Schichtsilikate wie Antigorit, Serpentin, Hornblenden, Amphibole, Chrisotil und Talkum, Metalloxide, wie Kaolin, Aluminiumoxide, Titanoxide und Eisenoxide, Metallsalze, wie Kreide, Schwerspat und anorganische Pigmente, wie Cadmiumsulfid und Zinksulfid, sowie Glas u.a.. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Wollastonit, Metall- und Glasfasern geringer Länge. Als organische Füllstoffe kommen beispielsweise in Betracht: Kohle, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstoffasern. Die anorganischen und organischen Füllstoffe können einzeln oder als Gemische verwendet werden.

Bevorzugt setzt man bei der Herstellung von (ii) 10 bis 70 Gew.-% Füllstoffe, bezogen auf das Gewicht von (ii), als (e) Hilfsmittel ein. Als.Füllstoffe verwendet man bevorzugt Talkum, Kaolin, Calziumcarbonat, Schwerspat, Glasfasern und/oder Mikroglaskugeln. Die Größe der Partikel der Füllstoffe ist bevorzugt so zu wählen, daß das Eintragen der Komponenten zur Herstellung von (ii) in den Raum zwischen (i) und (iii) nicht behindert wird. Besonders bevorzugt weisen die Füllstoffe Partikelgrößen von < 0,5 mm auf.

Die Füllstoffe werden bevorzugt in Mischung mit der Polyolkomponente bei der Umsetzung zur Herstellung der Polyisocyanat-Polyadditionsprodukte eingesetzt.

Die Füllstoffe können dazu dienen, den im Vergleich beispielsweise zum Stahl größeren thermischen Ausdehnungskoeffizient der Polyisocyanat-Polyadditionsprodukte zu verringern und damit dem des Stahls anzupassen. Dies für einen nachhaltig festen Verbund zwischen den Schichten (i), (ii) und (iii) besonders vorteilhaft, da damit geringere Spannungen zwischen den Schichten bei thermischer Belastung auftreten.

Bevorzugt werden zur Herstellung von (ii) als (e) übliche Schaumstabilisatoren eingesetzt, die kommerziell erhältlich und dem Fachmann allgemein bekannt sind, beispielsweise allgemein bekannte Polysiloxan-Polyoxyalkylen-Blockcopolymere, z.B. Tegostab 2219 der Firma Goldschmidt. Der Anteil an diesen Schaumstabilisatoren bei der Herstellung von (ii) beträgt bevorzugt 0,001 bis 10 Gew.-%, besonders bevorzugt 0,01 bis 10 Gew.-%, insbesondere 0,01 bis 2 Gew.-%, bezogen auf das Gewicht der zur Herstellung von (ii) eingesetzten Komponenten (b), (e) und gegebenenfalls (d). Der Einsatz dieser Schaumstabilisatoren bewirkt, das die Komponente (c) in der Reaktionsmischung zur Herstellung von (ii) stabilisiert wird.

Als Treibmittel (f) können aus der Polyurethanchemie allgemein bekannte Treibmittel eingesetzt werden, beispielsweise physikalische und/oder chemische Treibmittel. Derartige physikalische Treibmittel weisen im allgemeinen einen Siedepunkt bei einem Druck von 1 bar von größer (d.h. bei höheren Temperaturen als) -50°C auf. Beispiele für physikalische Treibmittel sind z.B. FCKW, HFCKW, HFKW, aliphatische Kohlenwasserstoffe, cycloaliphatische Kohlenwasserstoffe, jeweils beispielsweise mit 4 bis 6 Kohlenstoffatomen oder Gemische dieser Stoffe, beispielsweise Trichlorfluormethan (Siedepunkt 24°C), Chlordifluormethan (Siedepunkt -40,8°C), Dichlorfluorethan (Siedepunkt 32°C), Chlordifluorethan (Siedepunkt -9,2°C), Dichlortrifluorethan (Siedepunkt 27,1°C), Tetrafluorethan (Siedepunkt -26,5°C), Hexafluorbutan (Siedepunkt 24,6°C), iso-Pentan (Siedepunkt 28°C), n-Pentan (Siedepunkt 36°C), Cyclopentan (Siedepunkt 49°C).

Als chemische Treibmittel, d.h. Treibmittel die aufgrund einer Reaktion, beispielsweise mit Isocyanatgruppen, gasförmige Produkte bilden, kommen beispielsweise Wasser, Hydratwasser haltige Verbindungen, Carbonsäuren, tert.-Alkohole, z.B. t-Butanol, Carbamate, beispielsweise die in der Schrift EP-A 1000955, insbesondere auf den Seiten 2, Zeilen 5 bis 31 sowie Seite 3, Zeilen 21 bis 42 beschrieben Carbamate, Carbonate, z.B. Ammoniumcarbonat und/oder Ammoniumhydrogencarbonat und/oder Guanidincarbamat in Betracht.

Bevorzugt werden als Treibmittel (f) Wasser und/oder Carbamate eingesetzt.

Bevorzugt werden die Treibmittel (f) in einer Menge eingesetzt, die ausreicht, um die bevorzugte Dichte von (ii) zu erhalten. Dies kann mit einfachen Routineexperimenten, die dem Fachmann allgemein geläufig sind, ermittelt werden. Besonders bevorzugt werden die Treibmittel (f) in einer Menge von 0,05 bis 10 Gew.-%, insbesondere von 0,1 bis 5 Gew.-%, jeweils bezogen auf das Gesamtgewicht der Polyisocyanat-Polyadditionsprodukte, eingesetzt.

Das Gewicht von (ii) entspricht per Definition dem Gewicht der zur Herstellung von (ii) eingesetzten Komponenten (a), (b) und (c) sowie gegebenenfalls (d) und/oder (e).

Zur Herstellung der erfindungsgemäßen Polyisocyanat-Polyadditionsprodukte werden die Isocyanate und die gegenüber Isocyanaten reaktiven Verbindungen in solchen Mengen zur Umsetzung gebracht, daß das Äquivalenzverhältnis von NCO-Gruppen der Isocyanate (a) zur Summe der reaktiven Wasserstoffatome der gegenüber Isocyanaten reaktiven Verbindungen (b) und gegebenenfalls (f) 0,85 bis 1,25 : 1, vorzugsweise 0,95 bis 1,15 : 1 und insbesondere 1 bis 1,05 : 1, beträgt. Falls (ii) zumindest teilweise Isocyanuratgruppen gebunden enthalten, wird üblicherweise ein Verhältnis von NCO-Gruppen zur Summe der reaktiven Wasserstoffatome von 1,5 bis 60 : 1, vorzugsweise 1,5 bis 8 : 1, angewandt.

Die Polyisocyanat-Polyadditionsprodukte werden üblicherweise nach dem one shot-Verfahren oder nach dem Prepolymerverfahren, beispielsweise mit Hilfe der Hochdruck- oder Niederdruck-Technik hergestellt.

Als besonders vorteilhaft hat es sich erwiesen, nach dem Zweikomponentenverfahren zu arbeiten und die gegenüber Isocyanaten reaktiven Verbindungen (b), gegebenenfalls die Treibmittel (f) und gegebenenfalls die Katalysatoren (d) und/oder Hilfsmittel (e) in der Komponente (A) (Polyolkomponente) zu vereinigen und bevorzugt innig miteinander zu vermischen und als Komponente (B) die Isocyanate (a) zu verwenden.

Die Komponente (c) kann der Reaktionsmischung enthaltend (a), (b) und gegebenenfalls (f), (d) und/oder (e) zugeführt werden, und/oder den einzelnen, bereits beschriebenen Komponenten (a), (b), (A) und/oder (B). Die Komponente, die mit (c) gemischt wird, liegt üblicherweise flüssig vor. Bevorzugt wird die Komponenten in die Komponente (b) gemischt.

Das Mischen der entsprechenden Komponente mit (c) kann nach allgemein bekannten Verfahren erfolgen. Beispielsweise kann (c) durch allgemein bekannte Beladungseinrichtungen, beispielsweise Luftbeladungseinrichtungen, bevorzugt unter Druck, beispielsweise aus einem Druckbehälter oder durch einen Kompressor komprimiert, z.B. durch eine Düse der entsprechenden Komponente zugeführt werden. Bevorzugt erfolgt eine weitgehende Durchmischung der entsprechende Komponenten mit (c), so daß Gasblasen von (c) in der üblicherweise flüssigen Komponente bevorzugt eine Größe von 0,0001 bis 10, besonders bevorzugt 0,0001 bis 1 mm aufweisen.

Der Gehalt an (c) in der Reaktionsmischung zur Herstellung von (ii) kann in der Rücklaufleitung der Hochdruckmaschine mit allgemein bekannten Meßgeräten über die Dichte der Reaktionsmischung bestimmt werden. Die Gehalt an (c) in der Reaktionsmischung kann über eine Kontrolleinheit bevorzugt automatisch auf der Grundlage dieser Dichte reguliert werden. Die Komponentendichte kann während der üblichen Zirkulation des Materials in der Maschine auch bei sehr niedriger Zirkulationsgeschwindigkeit online bestimmt und reguliert werden.

Die erfindungsgemäß erhältlichen Verbundelemente finden Verwendung vor allem in Bereichen, in denen Konstruktionselemente benötigt werden, die großen Kräften standhalten, beispielsweise als Konstruktionsteile im Schiffbau, z.B. in Schiffsrümpfen, beispielsweise Schiffsdoppelrümpfe mit einer äußeren und einer inneren Wand, und Laderaumabdeckungen, Laderaumtrennwänden, Ladeklappen oder in Bauwerken, beispielsweise Brücken oder als Konstruktionselemente im Hausbau, insbesondere in Hochhäusern.

Die erfindungsgemäßen Verbundelemente sind nicht mit klassischen Sandwichelementen zu verwechseln, die als Kern einen Polyurethanund/oder Polyisocyanurathartschaumstoff enthalten und üblicherweise zur thermischen Isolierung eingesetzt werden. Derartige bekannte Sandwichelemente wären aufgrund ihrer vergleichsweise geringeren mechanischen Belastbarkeit nicht für die genannten Anwendungsbereiche geeignet.

Bevorzugt sind kompakte Polyisocyanat-Polyadditionsprodukte, d.h. Produkte, die nicht aus einem Netzwerk von gasgefüllten Zellen, die über Stege und Zellwände miteinander verbunden sind, bestehen.

Die Breite und die Länge der Verbundelemente können üblicherweise 0,5 bis 10 m, bevorzugt 1 m bis 5 m betragen.

## Patentansprüche

1. Verfahren zur Reparatur von Verbundelementen, die folgende Schichtstruktur aufweisen:
(i) 1 bis 20 mm Metall,
(ii) 10 bis 300 mm Polyisocyanat-Polyadditionsprodukte erhältlich durch Umsetzung von (a) Isocyanaten mit (b) gegenüber Isocyanaten reaktiven Verbindungen,
(iii) 1 bis 20 mm Metall, wobei
man aus dem Verbundelement einen Ausschnitt enthaltend (i), (ii) und gegebenenfalls (iii) herausschneidet, an den Schnittflächen des verbleibenden Verbundelements (ii) entfernt, so daß an den Schnittflächen (i) und gegebenenfalls (iii), wenn (iii) entfernt wird, um eine Länge (x) von mindestens 7 cm über (ii) hinausreichen, die ausgeschnittenen Schichten (i) und gegebenenfalls (iii) durch neue Schichten (ia) und gegebenenfalls (iiia) ersetzt und mit den verbliebenen Schichten (i) beziehungsweise gegebenenfalls (iii) des Verbundelementes verbindet, nach dem Verbinden der Schichten (i) mit (ia) und gegebenenfalls (iii) mit (iiia) in den sich zwischen den verbundenen Schichten (i)/(ia) und (iii) beziehungsweise gegebenenfalls (iii)/(iiia) befindenden freien Raum, der nicht von (ii) gefüllt ist, die Ausgangsstoffe zur Herstellung von (ii), insbesondere (a) und (b) füllt und anschließend in dem Raum zwischen den Schichten (i)/(ia) und (iii) beziehungsweise gegebenenfalls (iii)/(iiia) (a) Isocyanate mit (b) gegenüber Isocyanaten reaktiven Verbindungen umsetzt, wobei das Befüllen des Raumes zwischen (i)/(ia) und (iii) beziehungsweise gegebenenfalls (iii)/(iiia) mit (a) und (b) sowie gegebenenfalls den weiteren Ausgangsstoffen mit Hochdruckmaschinen mit Axialkolbendosierung durchgeführt wird, wobei der Vorratsbehälter mit Rührwerk und temperierbar ausgestaltet ist und die Austragsleistung 0,1 bis 3,0 kg/sec beträgt.

2. Verfahren nach Anspruch 1, wobei man den Ausschnitt enthaltend (i), (ii) und gegebenenfalls (iii) durch Sägen oder mittels eines Lasers herausschneidet.

3. Verfahren nach Anspruch 1, wobei man (ia) mit (i) und gegebenenfalls (iiia) mit (iii) durch Schweißen verbindet.

4. Verfahren nach Anspruch 3, wobei man den mit (a) und (b) zu befüllenden Raum zwischen (i)/(ia) und (iii)/gegebenenfalls (iiia) mit Ausnahme von Öffnungen (v) vor dem Befüllen mit (a) und (b) abdichtet.

5. Verfahren nach Anspruch 1, wobei man die Ausgangsstoffe (a) und (b) zur Herstellung von (ii) kontinuierlich ohne Unterbrechung in einem einzigen Arbeitsschritt in den zu befüllenden Raum zwischen (i)/(ia) und (iii)/ gegebenenfalls (iiia) einträgt.

6. Verfahren nach Anspruch 5, wobei man die Ausgangsstoffe mittels einer Hochdruckapparatur über einen Mischkopf einträgt.

7. Verfahren nach Anspruch 6, wobei man den Mischkopf an der Öffnung in (ia) oder (iiia), durch wobei die die Eintragung der Ausgangsstoffe erfolgt, mechanisch oder magnetisch fixiert.

## Claims

1. A process for repairing composite elements which have the following layer structure:
(i) from 1 to 20 mm of metal,
(ii) from 10 to 300 mm of polyisocyanate polyaddition products obtainable by reacting (a) isocyanates with (b) compounds reactive toward isocyanates,
(iii) from 1 to 20 mm of metal,
which comprises cutting out from the composite element a section comprising (i), (ii) and, where appropriate, (iii), removing (ii) at the cut surfaces of the remaining composite element so that (i) and, where appropriate, (iii), if (iii) is removed, protrude by a length (x) of at least 7 cm over (ii), replacing the layers (i) and, where appropriate, (iii) which have been cut out with new layers (ia) and, where appropriate, (iiia), and bonding these to the remaining layers (i) and, where appropriate, (iii) of the composite element, and, after the bonding of the layers (i) to (ia), and, where appropriate, (iii) to (iiia), the starting materials for preparing (ii), in particular (a) and (b), are charged to the unoccupied space not filled by (ii) located between the bonded layers (i)/(ia) and (iii), or, where appropriate, (iii)/(iiia), and then reacting (a) isocyanates with (b) compounds reactive toward isocyanates in the space between the layers (i)/(ia) and (iii) or, where appropriate, (iii)/(iiia), where high-pressure machinery using axial piston metering is used to introduce (a) and (b), and also, where appropriate, the other starting materials into the space between (i)/(ia) and (iii) or, where appropriate, (iii)/(iiia), and where the feed vessel has a stirrer and is temperature-controllable, and the discharge rate is from 0.1 to 3.0 kg/sec.

2. A process as claimed in claim 1, where the section comprising (i), (ii) and, where appropriate, (iii) is cut out by sawing or by means of a laser.

3. A process as claimed in claim 1, where welding is used to bond (ia) to (i) and, where appropriate, (iiia) to (iii).

4. A process as claimed in claim 3, where the space between (i)/(ia) and (iii)/where appropriate (iiia) to be filled with (a) and (b) is sealed off, except for openings (v) prior to filling with (a) and (b).

5. A process as claimed in claim 1, where the starting materials (a) and (b) for preparing (ii) are introduced continuously without interruption, in a single operation, into the space to be filled between (i)/(ia) and (iii)/where appropriate (iiia).

6. A process as claimed in claim 5, where the starting materials are introduced by means of a high-pressure apparatus, by way of a mixing head.

7. A process as claimed in claim 6, where the mixing head is mechanically or magnetically secured to the opening in (ia) or (iiia), through which the starting materials are introduced.

## Revendications

1. Procédé pour réparer des éléments composites qui présentent la structure de stratification suivante :
(i) 1 à 20 mm de métal,
(ii) 10 à 300 mm de produits de polyaddition de polyisocyanate que l'on peut obtenir par réaction de (a) isocyanates avec (b) des composés réactifs vis-à-vis des isocyanates,
(iii) 1 à 20 mm de métal, dans lequel
on découpe dans l'élément composite une section contenant (i), (ii) et le cas échéant (iii), on élimine (ii) sur les surfaces de découpe de l'élément composite restant, de manière qu'aux surfaces de découpe (i), et le cas échéant (iii), lorsqu'on retire (iii), dépasse d'une longueur (x) d'au moins 7 cm au-dessus de (ii), on remplace les couches (i) et le cas échéant (iii) découpées par de nouvelles couches (ia) et le cas échéant (iiia) et on les relie aux couches restantes (i) respectivement le cas échéant (iii) de l'élément composite, après la liaison des couches (i) avec (ia) et le cas échéant (iii) avec (iiia) dans l'espace libre qui se trouve entre les couches liées (i)/(ia) et (iii) respectivement le cas échéant (iii)/(iiia), et qui n'est pas rempli par (ii), on charge les produits de départ pour la production de (ii), en particulier (a) et (b), puis on les fait réagir dans l'espace compris entre les couches (i)/(ia) et (iii) respectivement le cas échéant (iii)/(iiia) (a) des isocyanates avec (b) des composés réactifs vis-à-vis des isocyanates, le remplissage de l'espace entre (i)/(ia) et (iii) respectivement le cas échéant (iii)/(iiia) étant effectué avec (a) et (b) ainsi que le cas échéant les autres produits de départ avec des machines haute pression équipées d'un dosage à pistons axiaux, le récipient de réserve étant équipé d'un dispositif d'agitation et étant à température réglable, et le débit étant de 0,1 à 3,0 kg/s.

2. Procédé selon la revendication 1, dans lequel on découpe la section contenant (i), (ii) et le cas échéant (iii) avec une scie ou au moyen d'un laser.

3. Procédé selon la revendication 1, dans lequel on relie par soudure (ia) avec (i) et le cas échéant (iiia) avec (iii).

4. Procédé selon la revendication 3, dans lequel on bouche avec (a) et (b) l'espace à remplir entre (i)/(ia) et (iiii)/le cas échéant (iiia) à l'exception des ouvertures (v) avant le remplissage avec (a) et (b).

5. Procédé selon la revendication 1, dans lequel on introduit les produits de départ (a) et (b) pour la production de (ii) de façon continue sans interruption en une seule étape de travail dans l'espace à remplir entre (i)/(ia) et (iii)/le cas échéant (iiia).

6. Procédé selon la revendication 5, dans lequel on introduit les produits de départ au moyen d'un appareil haute pression par une tête de mélange.

7. Procédé selon la revendication 6, dans lequel on fixe par un moyen mécanique ou magnétique la tête de mélange à l'ouverture dans (ia) ou (iiia) à travers laquelle s'effectue l'introduction des produits de départ.
